# EUROPEAN PATENT SPECIFICATION

(11) **EP 0 793 690 B1**
(45) Date of publication and mention of the grant of the patent: **16.09.1998**
(21) Application number: 95939494.1
(22) Date of filing: 18.10.1995
(51) Int. Cl.: C08L 53/02, D01F 8/00, D04H 1/00

(54) **COMPOSITION USEFUL FOR ELASTOMERIC ARTICLES AND ARTICLES PREPARED FROM THE COMPOSITION**
ZUSAMMENSETZUNG VERWENDBAR FÜR ELASTOMERE ARTIKEL UND AUS DIESER ZUSAMMENSETZUNG HERGESTELLTE ARTIKEL
COMPOSITION UTILE POUR DES ARTICLES EN ELASTOMERE ET ARTICLES PREPARES A PARTIR DE CETTE COMPOSITION

(30) Priority: 22.11.1994 US 343745
(43) Date of publication of application: 10.09.1997
(73) Proprietor: THE DOW CHEMICAL COMPANY, Midland, Michigan 48674 (US)
(72) Inventor: ESNEAULT, Calvin, P., Baton Rouge, LA 70816 (US); UZEE, Andre, J., Baton Rouge, LA 70820 (US); CALLAGHAN, Thomas, A., Saginaw, MI 48609 (US)
(74) Representative: Raynor, John
(86) International application number: US9512873
(87) International publication number: WO9616122

(56) References cited:
- EP-A- 0 454 173
- WO-A-93/13168
- WO-A-95/00586
- US-A- 4 329 309

## Description

This invention relates to a composition useful for preparing elastomeric articles such as films, fibers, woven articles and non-woven articles. The articles of this invention may be used in a wide variety of applications where elastomeric materials are useful. In particular, such articles are useful as low cost elastic members for disposable wearing apparel such as diapers and incontinent briefs, and other articles including medical gowns and disposable dresses.

The use of thermoplastic elastomers in such applications is well known. One class of thermoplastic elastomers is block copolymers having monovinylidene aromatic monomer blocks and conjugated diene monomer blocks. Such thermoplastic elastomers are often difficult to process, in that pure thermoplastic elastomers often do not draw well when extruded into articles. Therefore, such thermoplastic elastomers are often blended with other polymers to improve their processing. Thus, thermoplastic polymers such as polypropylene, polystyrene, polyethylene, ethylene vinyl acetate copolymers and polyurethane are suggested for mixture with the thermoplastic elastomers. See Kelly, U.S. Patents 4,329,309, 4,173,612 and 4,305,990.

Such thermoplastic elastomers blended with thermoplastic resins may, in certain circumstances, have poor stress relaxation properties and stress strain test of such materials show significant permanent deformation. Furthermore, such materials demonstrate high creep compliance, wherein creep compliance is defined as the time-dependent ratio of strain to stress. In addition, the use of unsaturated styrene block copolymers, although desirable for improving the aforementioned mechanical properties undergo change during thermal processing resulting in changes in physical properties and melt viscosity. Also, such materials exhibit low modulus of elasticity values in both directions when in some applications, a high modulus of elasticity is required in at least one direction.

Also, many elastomeric films yield balanced physical properties in the machine and transverse direction (that is, elastic modulus properties approximately equal in both directions). This is desirable in many applications. In other applications it is desirable to prepare films with unidirectional elastic properties (that is, elastic modulus properties in the machine direction which are much greater than in the transverse direction).

Therefore, what is needed is a thermoplastic elastomer composition which is useful for making elastomeric articles which has good stress relaxation properties, high stress retention, low creep compliance properties and a limited change in melt viscosity during processing and good elastic properties in at least one direction (preferably the transverse direction).

The invention is a composition useful in preparing elastomeric articles which comprises: A. from 70 to 95 parts by weight of one or more block copolymer(s) corresponding to the formula: A-B-R-(B-A)ₙ (Formula (I)) or A_{X}-(BA-)_{Y}-BA (Formula (II)) wherein each A is a polymer block comprising a monovinylidene aromatic monomer and each B is a polymer block comprising a conjugated diene, R is the remnant of a multifunctional coupling agent, and n is an integer from 1 to 5, x is or 1, and y is from 0 to 3, at least 40 percent by weight of the block copolymers have the B block comprised of isoprene, the weight percent of monovinylidene aromatic monomer in the block copolymer is from 10 to 35 percent by weight, the total block copolymer composition contains no more than 4 percent by weight of a diblock of the Formula B-A, the block copolymers have a melt flow rate of from 2 to 30; and B. from 5 to 30 parts by weight of a thermoplastic polymer comprising: a.) i. a copolymer comprising a monovinylidene aromatic monomer and an anhydride; and, optionally one or more of ii. polystyrene; or iii. polyethylene; or b.) of a blend of polystyrene and polyethylene; wherein the total parts of block copolymer and thermoplastic polymer is 100 parts and films prepared from the composition exhibit a creep compliance of 1.5 MPa⁻¹ or less as measured according to ISO 899-1981 (E) modified for elastomeric articles, a retention force of 60 percent or greater as measured according to ASTM-D 2991 at 30 minutes, and a permanent deformation of 10 percent or less as measured according to ASTM-D 4649.

In another embodiment, the invention comprises elastomeric articles comprising the composition of the invention. Such articles included films, fibers, non-woven netting and woven articles from fibers of the invention. The composition of the invention prepares elastomeric articles with good stress relaxation properties (that is, high stress retention) low creep compliance and limited change in melt viscosity during processing. Elastomeric is used herein as defined in ASTM D 1566-94 Standard Terminology Relating to Rubber.

The primary component of the compositions claimed herein is one or more block copolymers according to Formula I or Formula II. Both linear and radial block copolymers are suitably employed in the invention.

Preferable monovinylidene aromatic monomers for use herein include styrene and alkyl substituted derivatives of styrene. Examples include styrene, α-methylstyrene, vinyl toluene. The most preferred monovinylidene aromatic monomer is styrene. The A polymer block comprises one or more monovinylidene aromatic monomers. The A polymer block may comprise no more than 1 percent by weight of an ethylenically unsaturated co-monomer which polymerizes under anionic conditions. Preferably the A polymer block contains no comonomers. Preferably, the amount of monovinylidene aromatic monomer in the block copolymer is 10 percent by weight or greater, more preferably 12 percent by weight or greater. Compositions where the monovinylidene aromatic monomer content is less than about 10 percent by weight have inadequate strength. Preferably, the amount of monovinylidene aromatic monomer in the block copolymer is 35 percent by weight or less, and more preferably 28 percent by weight or less. Preferably, each monovinylidene aromatic monomer block has a peak molecular weight of 8,500 or greater and more preferably 9,000 or greater. Preferably, each monovinylidene aromatic monomer block has a peak molecular weight of 18,000 or less, more preferably 16,000 or less.

Conjugated dienes preferably employed in the present invention include 1,3-butadiene, isoprene or mixtures thereof. Preferably, the conjugated diene is isoprene. Preferably the B block may further comprise no more than about 1 percent by weight of an ethylenically unsaturated co-monomer which is copolymerizable under anionic conditions. Preferably, the ethylenically unsaturated co-monomer useful in this invention consists of carbon and hydrogen. The conjugated diene block preferably has a peak molecular weight of 35,000 or greater and more preferably 40,000 or greater. The conjugated diene block preferably has a peak molecular weight of 130,000 or less, more preferably 125,000 or less. In the embodiment where the block copolymer is in radial form, the diene blocks' peak molecular weight can range from 50,000 to 240,000. Preferably, the block copolymer has a peak molecular weight of 50,000 or greater, more preferably 60,000 or greater, and even more preferably 70,000 or greater. Preferably, the block copolymer has a peak molecular weight of 180,000 or less, more preferably 160,000 or less and even more preferably 150,000 or less. A blend of two or more block copolymers may be used in this invention.

Molecular weights are determined by gel permeation chromatography employing a polystyrene standard. Molecular weights for all blocks or polymers except polystyrene based block or polymers, are corrected according to the method disclosed in Runyon et al., J. of Applied Polymer Science 13, 2359 (1969) and Tung, J. of Applied Polymer Science 24, 953 (1979).

Most preferably, however, the block copolymers are triblock copolymers, that is, Formula (I) wherein n is equal to 1 or Formula (II) where x is 1 and y is 0. Preferably the block copolymer component comprises a blend of a styrene-isoprene-styrene triblock copolymer and a styrene-butadiene-styrene triblock copolymer. In such embodiment, preferably, the styrene-isoprene-styrene block copolymer is present in an amount of 40 percent by weight or greater, more preferably in 50 weight percent or greater, even more preferably 60 weight percent or greater and most preferably 70 weight percent or greater. Preferably, the styrene-isoprene-styrene triblock copolymer is present in an amount of 95 weight percent or less, more preferably 90 weight percent or less and most preferably 80 weight percent or less. In such blend, the styrene-butadiene-styrene triblock copolymer, if present, is present in an amount of 5 percent by weight or greater, more preferably 10 percent by weight or greater and most preferably 20 percent by weight or greater. Preferably, the styrene-butadiene-styrene triblock copolymer is present in an amount of 60 percent by weight or less, more preferably 50 percent by weight or less, even more preferably 40 percent by weight or less and most preferably 30 percent by weight or less.

The block copolymer or mixture of block copolymers has a melt flow rate (g/10 minutes, 200°C, 5 Kg) of greater than 2 and preferably 3 or greater. The block copolymer or mixture of block copolymers has a melt flow rate of 30 or less and more preferably of 25 or less and most preferably 20 or less.

The block copolymer composition contains no more than the specified amount of diblock copolymers. Diblock copolymers are polymers which contain only one monovinylidene aromatic monomer block and one conjugated diene block. The presence of significant diblock results in inferior properties in elastomeric articles prepared from the compositions of the invention, for example, lower stress retention and higher creep compliance. Preferably, the diblock copolymers are present in an amount of 4 percent by weight or less and more preferably 2 percent by weight or less of diblocks are present. The presence of diblock can be prevented by choice of process to prepare the block copolymers. In particular, if a sequential polymerization process is used, the product is substantially free of diblock copolymers. Such sequential polymerization processes are well known in the art and preferred for the preparation of the block copolymers used in this invention, see for instance U.S. Patent 5,242984 and U.S. Patent 5,134,968.

The composition of the invention may contain an extender which comprises hydrocarbon oils or polymers or oligomers derived from monomers having olefinic unsaturation compatible with the B block, or mixtures thereof. Among preferred extenders are aliphatic hydrocarbon oils or naphthenic oils, or mixtures thereof. More preferred extenders are the aliphatic hydrocarbon oils. The preferred aliphatic hydrocarbon and naphthenic oils are selected according to the ultimate end-use and the cost of such oils. Some commercially available block copolymers contain processing oils which are in effect extenders. Among preferred oils are TUFFLO™ 6056 mineral oil (trademark of Atlantic Richfield Company) and SHELLFLEX™ 371 mineral oil (trademark of Shell Oil Company). The preferred polymers useful as extender include styrene-ethylene-butene, polyisoprene, polybutadiene, polyethylene vinyl acetate, polyethylene methacrylate, ethylene-propylene diene monomer based polymers, styrene-butadiene random copolymers and ethylene-styrene copolymers. More preferred polymers include polyisoprene, polybutadiene, styrene-butadiene random copolymers and hydrogenated forms of such polymers. Most preferred polymers include polyisoprene, and polybutadiene and the hydrogenated forms of each polymers. The presence of an extender, especially an oil, tends to degrade the properties of the films prepared from the compositions of the invention. If too much is present the films do not exhibit the desired properties. The extender or oil, if present, is present in an amount of 14 percent by weight of the block copolymer composition or less, more preferably 10 percent by weight or less, even more preferably 5 percent by weight or less and most preferably 0.

In Formula (I), n is preferably 1 to 3 and more preferably 1. In Formula (II), x is preferably 1 and y is preferably an integer of from 0 to 2, and more preferably y is the integer 0.

Blended with the block copolymers is a thermoplastic polymer which enhances the processability and the final properties of the articles made from the composition of this invention. The thermoplastic polymer comprises a copolymer of a monovinylidine aromatic monomer and an anhydride copolymer, polyethylene, polystyrene, or a mixture thereof.

In one embodiment, the thermoplastic polymer is a monovinylidene aromatic monomer anhydride copolymer. The monovinylidene aromatic monomer anhydride copolymers comprise in polymerized form from 3 to 35 weight percent of an unsaturated dicarboxylic acid an hydride and from 65 to 97 weight percent of a monovinylidene aromatic monomer. In one embodiment the monovinylidene aromatic monomer anhydride copolymers are rubber-modified, with conventional rubber modifiers well known in the art. Preferable anhydrides include maleic anhydride, itaconic anhydride, citraconic anhydride and aconitic anhydride. Aromatic monovinylidene monomers include styrene, vinyl toluene, chlorostyrene, α-methylstyrene and t-butylstyrene, dichlorostyrene. Mixtures of said monomers may also be used. Preferably, the copolymer is a styrene-maleic anhydride copolymer.

Various methods are known whereby the monovinylidene aromatic monomer anhydride copolymer may be prepared. Non-equimolar copolymers, such as described above, are readily prepared by a continuous process such as described in U.S. Patent 2,769,804. Preferably, the monovinylidene aromatic monomer anhydride copolymer is a homogeneous, essentially gel-free copolymer prepared according to U.S. Patent 3,336,267. The copolymers useful in this invention preferably have a melt flow rate of 0.1 or greater and more preferably 1.0 or greater (g/10 minutes, 230°C, 2.16 Kg). The copolymers useful in this invention preferably have a melt flow rate of 10.0 or less and most preferably 6.0 or less. Styrene maleic anhydride copolymers most preferred for use in this invention are available from Arco Chemical under the trademark and designations DYLARK® 332, and 232. Also useful are rubber-modified styrene maleic anhydride copolymers available under the trademark and designations DYLARK® 238, 250 and 278. In this embodiment, the films prepared from the composition exhibit unidirectional elasticity in the transverse direction. In particular the films are elastic in the transverse direction and relatively non-elastic in the machine direction.

In another embodiment, the thermoplastic polymer is polystyrene. The polystyrene useful in this invention is any polystyrene which enhances the processing of the composition of this invention and the properties of the articles made from the composition of this invention and preferably has a melt flow rate of 0.1 (g/10 minutes, 200 C, 5 Kg) or greater and more preferably 1.0 or greater. Polystyrene useful in this invention preferably has a melt flow rate of 20 or less and more preferably 15 or less. Polystyrene useful in this invention is available commercially from a variety of sources. Preferred polystyrene useful herein is crystal polystyrene and high impact polystyrene which is modified with rubbers having Tg less than 0°C, preferably less than -20°C, to modify the impact properties of the foregoing monovinylidene aromatic polymers. Examples of preferable rubbers are homopolymers of C₄₋₆ conjugated dienes, especially butadiene or isoprene; copolymers of one or more monovinylidene aromatic monomers and one or more C₄₋₆ conjugated dienes, especially butadiene or isoprene; copolymers of ethylene and propylene or ethylene, propylene and a non-conjugated diene, especially 1,6-hexadiene or ethylidene norbornene; homopolymers of C₄₋₆ alkyl acrylates; copolymers of C₄₋₆ alkyl acrylates and a copolymerizable co-monomer, especially a monovinylidene aromatic monomer or a C₁₋₄ alkyl methacrylate. Also included are graft polymers of the foregoing rubbery polymers wherein the graft polymer is a monovinylidene aromatic polymer. A most preferred rubbery polymer is polybutadiene or a styrene-butadiene copolymer. Most highly preferred polystyrenes and high impact polystyrenes are those wherein the polystyrene matrix has a weight average molecular weight (M_{w}) from 60,000 to 225,000 (preferably from 100,000 to 225,000 and more preferably from 150,000 to 225,000). Examples of polystyrene preferred for use in this invention include polystyrene available from The Dow Chemical Company under the trademarks and designations STYRON® 685, STYRON® 613, STYRON® 623 and STYRON® 615 APR.

In another embodiment, the thermoplastic polymer is polyethylene. Polyethylene useful in this invention is any polyethylene which enhances the processing of the composition of this invention and the properties of the articles made from the composition of this invention. Preferred classes of polyethylene are polyethylene plastomers, high impact polyethylene, low density polyethylene, linear low density polyethylene or ultra low density polyethylene. Preferably, the polyethylene has a melt flow rate of 0.1 or greater (g/10 minutes, 190°C, 2.16 Kg), and more preferably 0.5 or greater. Preferably, the polyethylene has a melt flow rate of 8 or less, more preferably 6 or less, and most preferably 4 or less. Polyethylene preferred for use in this invention includes low density polyethylene and polyethylene plastomers available from The Dow Chemical Company under the trademark and designation LDPE 681l, LDPE 640, LDPE 510, and LDPE 550 for low density polyethylenes and AFFINITY® PL 1840, PL 1880, and PL 1845 polyethylene plastomers.

In a preferred embodiment, the block copolymer is present preferably in an amount of 70 parts by weight or greater of the total composition, more preferably 75 parts by weight or greater and most preferably 80 parts by weight or greater. The block copolymer is present in an amount of 95 parts by weight or less of the total composition, preferably 90 parts by weight or less and most preferably 85 parts by weight or less. The thermoplastic polymer is present in an amount of 5 parts by weight or greater, more preferably 10 parts by weight or greater and most preferably 15 parts by weight or greater. The thermoplastic polymer is preferably present in an amount of 30 parts by weight or less of the total composition, more preferably 25 parts by weight or less and most preferably 20 parts by weight or less. As used herein, parts by weight related to the block copolymer and thermoplastic polymer refers to compositions wherein the sum total of the parts of the two components is equal to 100 parts. The amount of thermoplastic polymer used is dependent upon the article produced and the method of producing the article. One skilled in the art would recognize the necessary properties which the composition of the invention must have to allow the composition to be processed by the chosen method. For instance, films may be cast wherein as little as 5 parts by weight of thermoplastic polymer is used, whereas, at least about 15 parts by weight of the thermoplastic polymer is preferably used to prepare films by extrusion blowing methods.

In one preferred embodiment, the thermoplastic polymer is a blend of the monovinylidene aromatic monomer anhydride copolymer with polyethylene, polystyrene or a mixture thereof. The total amount of thermoplastic polymer in this embodiment is preferably 30 parts or less and more preferably 25 parts by weight or less. A composition according to the invention contains preferably 20 parts by weight or less of the total composition of monovinylidene aromatic monomer anhydride copolymer. Such composition comprises no more than 10 parts by weight polystyrene, polyethylene or a mixture thereof. If present, such blend comprises preferably 1 part by weight or greater of the total composition of polystyrene, where present, more preferably 2 parts by weight or greater. Such composition comprises preferably 10 parts by weight or less of polystyrene and more preferably 7 parts by weight or less of polystyrene and more preferably 5 parts by weight or less of polystyrene. If present, polyethylene is present in an amount of 1 part by weight or greater and more preferably 2 parts by weight or greater. Such blend preferably comprises 10 parts by weight or less of polyethylene, more preferably 7 parts by weight or less of polyethylene and most preferably 5 parts by weight or less of polyethylene.

In another embodiment, the processing aid is a blend of polyethylene and polystyrene. Such blend comprises preferably 2 parts by weight or greater of the total composition of polystyrene, more preferably 3 parts by weight or greater of polystyrene and most preferably 5 parts by weight of polystyrene. Such composition comprises preferably 15 parts by weight or less of polystyrene, more preferably 10 parts by weight or less of polystyrene and most preferably 7 parts by weight of polystyrene. Such blend comprises 5 parts by weight or greater of polyethylene, more preferably 7 parts by weight or greater of polyethylene and most preferably 10 parts by weight of polyethylene. Such blend preferably comprises 28 parts by weight or less of polyethylene, more preferably 15 parts by weight or less of polyethylene and most preferably 13 parts by weight of polyethylene.

The composition of this invention may further include ingredients commonly used in the art in compositions useful in preparing elastomeric articles, such as antiblock substances, antistatic agents, and slip agents, see for instance U.S. Patent 4,476,180.

Preferred compositions of the invention may contain from 0 to 20 parts by weight of commercial antiblock substances, preferably from 1 to 10 parts by weight. The preferred antiblock material is silica in a blend with polyethylene, for example, Product 1901, a 50-50 mixture of polyethylene and silica available from Southwest Chemical, Houston, Texas. The polyethylene component from this additive is a part of the thermoplastic polymer additive. Parts by weight as used herein for additional additives means parts per 100 parts of the claimed composition of the block copolymer and the thermoplastic additive.

Reduction of blocking in the films of the present invention can also be obtained by loading the film surface with small particles or powders such as chalk, clay, silica, and similar materials. Powdered polymeric materials (for example., polytetrafluoroethylene) can also be used to reduce blocking. Those skilled in the art would recognize how much of this additive to utilize.

Antistatic agents may be used in compositions of the invention; examples of such agents include ethoxylated amines and quaternary amine salts having organic constituents of 12 to 18 carbon atoms in length. Agents of this type slowly defuse to the surface of the film and, because of their ionic character, form an electrically conductive layer on the surface of the film. Antistatic agents commonly constitute from 1 to 5 parts of the weight of the composition.

Slip agents may be incorporated into the composition of the invention to reduce die lip build-up and drag over rollers and other forming equipment. Examples of such agents are those commonly derived from amides of fatty acids having 12 to 22 carbon atoms. Such agents may augment the antiblocking properties of the composition of the invention. Such slip agents are commonly incorporated in compositions in amounts of from 0.05 to 5 parts by weight of the composition. A preferred slip agent is KEMAMIDE® 'E' ultra fatty amide (Erucamide) available from Humko Chemical Division, Witco Chemical Corp., Memphis, Tennessee, U.S.A.

In order to minimize degradation of films of the invention during processing by extrusion or other techniques, heat stabilizers and antioxidants commonly used in the art may be added to the compositions. Examples of heat stabilizers and antioxidants that may be used include IRGANOX® 1010 tetrakis(methylene (3,5- di-tert-butyl-4-hydroxyhydrocinnamate)) methane, IRGANOX® 1076 octadecyl 3,5-di-tert-butyl-4-hydrohydroxycinnamate and IRGANOX® 565 4-((4,6-bis(octylthio)-s-triazin-2-yl)amino)-2,6-di-tert-butylphenol. Secondary antioxidants may be used with the primary antioxidants, for example aromatic phosphite compounds such as tris-nonyl-phenol phosphite. Heat stabilizers and antioxidants are incorporated in the compositions of the invention at a level of from 0.05 parts to 1.5 parts by weight of the composition, when used.

Degradation of the films of the present invention by exposure to ultraviolet light can be moderated by the addition of photostabilizers known in the art. Examples of preferred photostabilizers include derivatives of benzophenone. Such photostabilizers are generally incorporated in the polymer formulations at a level of from 0.1 parts to 3 parts by weight of the composition, when used.

Pigments may be added to the polymer formulations to impart a particular color to the resulting films. Pigments are typically added to the resin blend in the form of concentrates, formulated to improve dispersion of the pigment, at levels of from 0.5 parts to 5 parts by weight of the composition, when used.

The optional constituents described hereinabove may be used alone or in combination with any or all of the other optional constituents. If the additive is added in admixture with a thermoplastic polymer as described herein, the amount of thermoplastic polymer mixed with the additive is counted in the total amount of thermoplastic polymer used in the formulation.

The compositions of the invention may be prepared by contacting the ingredients in an appropriate mixing device such as an extruder, twin-screw extruder or a high efficiency mixer typically used for thermoplastics or thermoplastic elastomers, such as a Banbury or Farrel Continuous Mixer (FCM). For laboratory size samples a bench top intensive mixer such as a Haake Rheocord 90 with a mixing bowl is preferred. The mixing can be performed in the process of forming an article, for instance, in a blown film or cast film process, or as a separate step. When mixing is performed in an apparatus separate from the forming device, the composition is pelletized using conventional pelletizing equipment such as that offered by Gala Industries Inc, Eagle Rock, Virginia, U.S.A., and Conair Jetro, Bay City, Michigan, U.S.A. Pelletized product in such embodiments is then fed directly to the forming device. The mixing is preferably performed at a temperature of about 130°C or greater and more preferably at a temperature of about 150°C or greater. The mixing is preferably performed at a temperature of about 225°C or less and more preferably at a temperature of about 205°C or less.

The compositions of this invention can be formed into elastomeric objects such as films, fibers, netting and can be used as is or attached to woven articles and non-woven articles. Processes for preparing such materials are well known to those skilled in the art. Films may be prepared using extrusion blown means or cast means.

Extrusion blown films may be prepared from the compositions of this invention using standard equipment, standard techniques and typical conditions. A polyolefin-type extruder is preferred, but other designs are also acceptable. A die gap of 5 to 120 mils (127µm to 3048µm) is acceptable, a gap of 10 to 80 mils (254µm to 2032µm) is preferred, and a gap of 20 to 50 mils (508 µm to 1270 µm) is most preferred. Melt temperatures of 170°C to 225°C are acceptable and between 175°C and 205°C are preferred. A blow-up ratio of 1.0:1.0 to 3.0:1.0 is preferred. Rapid cooling of the extruder blown film is preferably performed by a dual lip cooling ring. Due to the low modulus of the film produced from the composition of this invention, a rollered collapsing frame is preferred to avoid bubble chatter.

A film which is extrusion blown from the composition of this invention is between 0.5 and 10 mils (12.7 µm to 254 µm) in thickness, and is preferably between 1 and 6 mils (25.4 µm to 152.4 µm) in thickness and is most preferably between 1 and 4 mils (25.4 µm to 101.6 µm) in thickness.

Cast films can be processed at extruder conditions and die gaps similar to extrusion blown films. Draw down ratios of 5:1 to 20:1 are preferred.

Creep compliance properties were determined according to ISO 899-1981(e) modified for elastomeric products. Strain is measured by hanging a 300 g weight from a sample for a period of 60 minutes in a forced air oven at 37.2°C with a 1 inch (2.54 cm) gauge mark on the sample. For compression molded specimens the sample is an ASTM-D 412 Type C dumbbell (0.76 mm thick). Measurements are taken in the oven under load after 60 minutes. For film samples the samples are 25.4 mm wide x 101.6 mm long x 0.076 mm thick. Measurements are taken at 0 and 60 minutes. The percent strain is determined at 60 minutes. Creep compliance is the time-dependent ratio of strain to stress during creep and the units are MPa⁻¹.

Stress relaxation properties were determined according to ASTM D2991-84. Stress relaxation is defined as the time-dependent decrease in stress in a solid under given constraint conditions. Stress relaxation is measured using an INSTRON Model 1123 load frame with a 22.67 kg load cell, at 25.4 mm gauge length; only one specimen was tested and data was collected up to a maximum of 30 minutes; single point relaxation data is reported herein as stress retention. Stress retention is defined as the fraction of initial force at maximum extension retained after 30 minutes of relaxation (retention = stress (30 minutes)/stress (initial) x 100).

Preferably, the elastomeric articles of this invention have a creep compliance of 1.5 5 MPa⁻¹ or less and most preferably 1.0 MPa⁻¹ or less in at least one direction. Preferably, the elastomeric articles of the invention have a permanent deformation of 10 percent or less and more preferably 8 percent or less as measured according to ASTM-D 4649. Permanent deformation is measured at 200 percent elongation. Preferably, the elastomeric articles of the invention have a retention in at least one direction of 60 percent or greater and more preferably 65 percent or greater.

In applications where a high modulus of elasticity is required in at least one direction while retaining elastic performance in the perpendicular direction, articles of this invention are prepared preferentially with a monovinylidene aromatic monomer anhydride copolymer as the thermoplastic material. Articles of such composition preferably demonstrate the elastomeric properties defined in the preceding paragraph in at least one direction. Articles of the invention preferably demonstrate a modulus of elasticity in at least one direction of 60 MPa or greater, even more preferably 75 MPa or greater and more preferably 90 MPa or greater as measured according to ASTM-D 882.

The following examples are included for illustrative purposes only and are not intended to limit the scope of the claims. Unless otherwise stated, all parts and percentages are by weight.

The following materials were used in the examples.

SBS is VECTOR® 8550-D styrene block copolymer (28.7 percent styrene, 71.3 percent butadiene, melt flow rate of 6.4 g/10 minute, (200°C, 5.0 Kg load)) having a peak molecular weight of 77,603.

SIS-1 is VECTOR® 4100-D (15.1 percent styrene, 84.9 percent isoprene, melt flow rate 4.9 g/10 minute (200°C, 5 Kg load) having a peak molecular weight of 157,358.

SIS-2 is VECTOR® 4211 styrene block copolymer (30.0 percent styrene, 70.0 percent isoprene, melt flow rate 10.6 g/10 minute (200°C, 5 Kg load) having a peak molecular weight of 93,812).

SIS-3 is VECTOR® 6101-D styrene block copolymer (18.8 percent styrene, 81.2 percent isoprene, melt flow rate 10.4 g/10 minutes (200°C, 5 Kg load) having a peak molecular weight of 123,935).

SIS-4 is VECTOR® 4113 styrene block copolymer (a blend of a styrene-isoprene-styrene triblock copolymer and a diblock of styrene-isoprene (18.0 percent diblock, 15.3 percent styrene, 84.7 percent isoprene, melt flow rate 10.5 g/10 minute, (200°C, 5 Kg load) having a peak molecular weight of 151,607).

SMA is DYLARK® 332, a styrene maleic anhydride copolymer (having a melt flow rate of 1.9 g/10 minutes, (230°C, 2.16 Kg load).

PE is Dow LDPE® 681 (density 0.922 g/cc, melt flow rate 5.52 g/10 minute (200°C, 5 Kg load)).

PS is STYRON® 685 polystyrene (melt flow rate 3.0 g/10 minute (200°C, 5 Kg load)).

AO is IRGANOX® 1010 hindered phenolic-type antioxidant.

KE is KEMAMIDE® E ultra fatty amid (Erucamide) slip agent.

ABC is Southwest Chemical Co., antiblock concentrate (50% LDPE/50% silica), Product 1901.

Molecular weights were determined according to gel permeation chromatography using polystyrene standards. More particularly, size exclusion chromatography was used. The apparatus used has 2 columns of 10⁵ Å, 1 column of 10⁴ Å and one mixed bed. The solvent was tetrahydrofuran (THF). The temperature was 40°C. The apparatus was calibrated over a range of 1350 to 3,1 50,000 polystyrene standards from Polymer Labs. Molecular weights were corrected according to Runyon, supra.

### Example 1

23.8 g of SBS, 23.8 g of SIS-1,4.2 g of PS, 4.2 g of LDPE, and 0.28 g of AO was pre-m ixed into a 400 mL container. A Haake Rheocord 90 torque rheometer with Model 600 mixing bowl was pre-heated (Zones 1 and 3: 193°C; Zone 2: 188°C). The above mixture (56 g total) was loaded into a bowl with rotors turning at 20 RPM and the overhead ram, which had 5 Kg weight, was lowered. The rotor was increased to 50 RPM within 3 minutes. At 50 RPM, zone temperatures were adjusted to maintain polymer melt near 200°C. After 10 minutes processing, the rotors were stopped, the mixer disassembled, and the fused mixture removed and immediately placed on pre-heated Farrel 3 inches by 7 inches (7.6 cm by 17.8 cm) roll mill (Model 3FF500) at 155°C roll temperature for 90 seconds. The sheet was removed and used for subsequent testing. Sheets were prepared (approximately 0.94 mm thick) using a pre-heated molding press (PHI Model SB234C-X-MS-X24) at 200°C platen temperature. 7.0 to 7.5 g of the above roll mill specimen was evenly distributed into a 75 mm wide by 115 mm high by 0.94 mm thick chase layered between tetrafluoroethylene-coated glass sheet and metal backing plates. The alignment of roll mill direction was tracked. The specimen was molded as follows: pre-heat 3.0 minutes at minimal pressure; medium force 0.5 minutes (10,000 Kg ram force); material cure 3.0 minutes (20,000 Kg ram force); cooling period 4.5 minutes (20,000 Kg ram force, ambient temperature water cooling). The specimens were stored at least 24 hours at 23°C and then die-cut using an ASTM-D 1822 Die L. Relaxation data were determined according to ASTM D2991-84 using an INSTRON Model 1123 load frame with a 22.67 kg load cell. Initial gauge length was 25.4 mm and only one specimen per compound was tested. Samples were pulled transverse to the roll mill direction to 200 percent elongation at a rate of 508 mm/ minute crosshead rate and data collected at regular intervals up to a maximum of 30 minutes as described as follows:

| | | | | | | | | | |
|---|---|---|---|---|---|---|---|---|---|
| Time (Min.) | 0 | 0.5 | 1 | 2 | 3 | 5 | 10 | 20 | 30 |
| Force (N) | 5.52 | 4.67 | 4.58 | 4.49 | 4.40 | 4.31 | 4.14 | 4.00 | 3.87 |

Single-point relaxation data is reported as stress retention where stress retention or retention is defined as the fraction of initial stress that is retained at 30 minutes (retention = stress (30 minutes)/ stress (initial) x 100). In this example, stress retention is 3.87/5.52 x 100 = 70.1%.

Using the above-type specimens, tensile properties were obtained according to ASTM-D 412: ultimate tensile strength = 17.84 MPa, ultimate elongation at break = 1006 percent; force at 150 percent, 200 percent and 300 percent was 1.79 MPa, 2.12 MPa and 2.94 MPa, respectively. Using above-type specimens, permanent deformation was determined according to ASTM 4649 (A13, Type I material method modified as follows: crosshead rate at 25.4 mm per minute, 25.4 mm gauge length, 200 percent maximum elongation tested only, 0 compression molded specimens). Results were 4.8 percent permanent deformation. Melt flow rate (ASTM D1238, 200°C, 5 Kg) for the processed blend was 6.8 g/10 minutes. Using specimens prepared as described above, creep compliance properties were determined according to ISO-899-1981 1981(E) modified for elastomeric products (37.2°C in a forced air oven, 300 g force, 60 minutes, ASTM-D 412 Type C specimens, 0.91 mm thick, 25.4 mm gauge length, percent strain measured. Creep compliance for the processed blend was 0.062 MPa⁻¹.

### Example 2

4849 g of 515-3, 572 g of LDPE, 285 g of PS, 143 g of KE and 57 g of AO were blended in a 20-liter closed bucket for 20 minutes, then compounded and pelletized on a Werner-Pfleiderer ZSK twin-screw extruder (1340 mm length, 1 atmospheric vent, 4 die holes of 3 mm diameter). The extruder was operated at 200 RPM, 133°C to 185°C. The pellets were dried. Film was blown from pellets using a Modern Plastics Machine (MPM) film tower attached to an MPM single-screw extruder with a 48 mm diameter die. Temperatures were 171°C to 191°C and layflat was approximately 216 mm. Film specimens were cut using a 25.4 mm x 152.4 mm die in both machine direction and transverse direction from a test sample of 0.08 mm thickness (Blow Up Ratio (BUR) = 2.9, and Draw Down Ratio (DDR) = 8.8). Machine direction results were: ultimate tensile strength = 19.68 MPa, ultimate elongation at break = 950 percent, force at 100 percent, 150 percent and 300 percent elongation = 2.33 MPa, 2.61 MPa and 3.25 MPa, respectively. Transverse direction test results were: ultimate tensile strength = 17.84 MPa, ultimate elongation at break = 950 percent, force at 100 percent, 150 percent and 300 percent elongation = 1.79 MPa, 2.01 MPa and 2.52 MPa, respectively. Relaxation data were collected as in Example 1 except that film type specimens were used.

| | | | | | | | | | |
|---|---|---|---|---|---|---|---|---|---|
| Time (Min.) | 0 | 0.5 | 1 | 2 | 3 | 5 | 10 | 20 | 30 |
| Force (N) | 4.63 | 3.91 | 3.84 | 3.77 | 3.72 | 3.67 | 3.60 | 3.51 | 3.44 |

In this example, stress retention is 3.44/4.63 x 100 = 74,3 %.

Results according to ASTM-D 4649 (A13, Type I material method, crosshead rate at 101.6 mm per minute, 101.6 mm gauge length, 200 percent maximum elongation tested only) were 8.8 percent permanent deformation.

Creep compliance data were collected as in Example 1 except that film type specimens were used. Creep compliance for the film in the transverse direction was 0.626 MPa⁻¹.

### Examples 3-17 (Examples 4, 6, 8, 10 and 16 are comparative)

Compositions and compression molded samples were prepared and tested according to Example 1. The compositions of each sample are compiled in Table I. The results of testing are compiled in Table I. Standard processing means processing for 10 minutes. Extended processing means processing for 45 minutes. In Table I the total amount of all components for each example is 100 weight percent. In Table I parts SBC and parts thermoplastic refers to the parts of SBC and thermoplastic present, respectively, in relationship to the total parts of SBC and thermoplastic present.

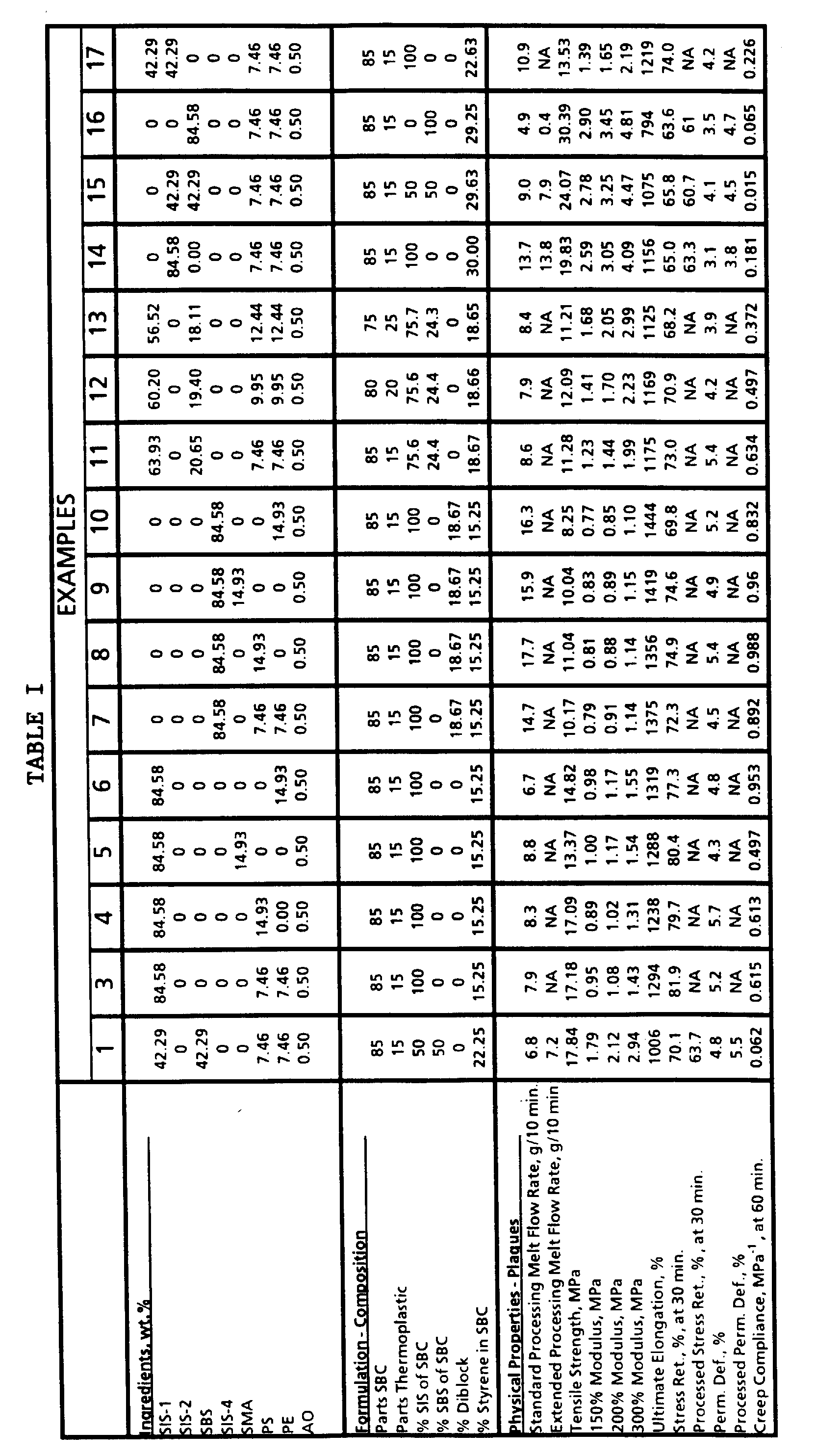

### Example 18

307 Pounds (139.5 Kg) of SIS-3, 156 pounds (70.9 Kg) of SBS, 101 pounds (45.9 Kg) of SMA, 29 pounds of ABC, 2.89 pounds (1.3 Kg) of AO and 3.47 pounds (1.57 Kg) of KE were blended in a 500-liter ribbon blender for 30 minutes, then compounded and pelletized on a Werner-Pfleiderer ZSK-70 twin-screw extruder equipped with a Gala pelletizer (1 atmospheric vent, 24 die holes of 6.35 mm diameter). The extruder was operated at 250 to 300 rpm, 145 to 215°C. Pellets were placed on a pre-heated Farrel roll mill as described in Example 1 and prepared into sheets and tested as in Examples 3 to 17. The results are compiled in Table 2.

Film was blown from pellets using a Modern Plastics Machine (MPM) film tower attached to an MPM single-screw extruder with a 48 mm diameter die. Temperatures were 160°C to 205°C and layflat was approximately 200 mm. Film specimens were cut using a 25.4 mm by 152.4 die in both the machine and transverse direction from a test sample of 0.076 mm thickness (BUR = 2.7, DDR = 7.34). Machine direction results were: ultimate tensile strength = 15.20 MPa, ultimate elongation at break = 906 percent, force at 150 and 300 percent elongation = 7.27 MPa and 7.92 MPa respectively. Transverse direction results were: ultimate tensile strength = 12.03 MPa, ultimate elongation at break = 881 percent, force at 150 and 300 percent elongation = 1.77 MPa and 2.45 MPa respectively. Relaxation data were collected as in Example 2 for film specimens.

| | | | | | | | | | |
|---|---|---|---|---|---|---|---|---|---|
| Time(Min.) | 0 | 0.5 | 1 | 2 | 3 | 5 | 10 | 20 | 30 |
| Force (N) | 3.71 | 3.20 | 3.07 | 2.98 | 2.91 | 2.83 | 2.71 | 2.60 | 2.54 |

In this example, stress retention is 2.54/3.71 x 100 = 68.4%.

Results for permanent deformation, according to ASTM D4649 (A13, Type 1, material method, crosshead rate at 25.4 mm/min., 25.4 mm gauge length, 200 percent maximum elongation tested only), were 7.4 percent permanent deformation.

Results according to ASTM 882 for elastic modulus (25.2 mm x 152.4 mm x 0.076 mm sample, 101 mm gauge length, 2.54 mm per 25.4 mm strain rate) were for the machine direction 119.5 MPa and for the transverse direction 6.15 MPa. Creep compliance data were collected as in Example 2. Creep compliance for the machine direction 0.003 MPa⁻¹ and for the transverse direction 0.852 MPa⁻¹.

### Example 19

A sample was prepared and tested according to Example 18. The composition and results are compiled in Table II and are compared to Example 18 in Table II.

**TABLE II**

| | EXAMPLES | |
|---|---|---|
| | 18 | 19 |
| **Ingredients, wt.%** | | |
| SIS-3 | 51.20 | 65.62 |
| SBS | 26.06 | 16.40 |
| SMA | 16.90 | 0 |
| PS | 0 | 4.86 |
| PE | 0 | 7.22 |
| ABC | 4.81 | 4.86 |
| AO | 0.46 | 0.46 |
| KE | 0.56 | 0.59 |

| **Formulation-Composition** | | |
|---|---|---|
| Parts SBC | 80 | 85 |
| Parts Thermoplastic | 20 | 15 |
| %SIS of SBC | 66 | 80 |
| % Diblock | 0 | 0 |
| % Styrene in SBC | 21.81 | 20.26 |

| **Physical Properties - Plaques** | | |
|---|---|---|
| Melt Flow Rate, g/10 min. | 10.8 | 10.8 |
| Tensile Strength, MPa | 11.38 | 14.21 |
| 150% Modulus, MPa | 2.37 | 1.57 |
| 200% Modulus, MPa | 2.90 | 1.89 |
| 300% Modulus, MPa | 4.06 | 2.50 |
| Ultimate Elongation, % | 1075 | 1163 |
| Stress Ret., % | 61.4 | 73.6 |
| Perm. Def., % | 4.1 | 4.5 |
| Creep Compliance, MPa⁻¹ | 0.684 | 1.050 |

| **Physical Properties- Films** | | |
|---|---|---|
| Film Thickness, mm | 0.0762 | 0.0762 |
| Blow Up Ratio | 2.68 | 2.68 |
| Draw Down Ratio | 6.22 | 6.22 |
| Tensile Strength, MPa | | |
| Machine Direction (MD) | 15.20 | 14.35 |
| Transverse Direction (TD) | 12.03 | 13.80 |
| 150% Modulus, MPa | | |
| MD | 7.27 | 2.04 |
| TD | 1.77 | 1.59 |
| 300% Modulus, MPa | | |
| MD | 7.92 | 2.42 |
| TD | 2.45 | 2.03 |
| Ultimate Elongation, % | | |
| MD | 906 | 975 |
| TD | 881 | 944 |
| Elastic Modulus, MPa | | |
| MD | 119.50 | 10.15 |
| TD | 6.15 | 4.11 |
| Stress Ret., % at 30 min. | | |
| MD | 45.3 | 68.4 |
| TD | 68.3 | 73.2 |
| Perm. Def., % | | |
| MD | 16.4 | 12.6 |
| TD | 7.4 | 7.9 |
| Creep Compliance, MPa⁻¹ at 60 min. | | |
| MD | 0.003 | 0.517 |
| TD | 0.852 | 0.541 |

Comparison of Examples 3 to 6 to Examples 7 to 10, respectively, establishes that product containing 18.69 percent diblock show lower percent stress retention while having similar permanent deformation properties. These examples differ only in the diblock level. High stress retention values are better for elastic properties.

### Creep Compliance

Comparison of Examples 3 to 6 to Examples 7 to 10, respectively, establishes that lower creep compliance values are obtained for similar materials when diblock is not present and when styrene is present in the thermoplastic polymer. Comparison of Example 4 to Example 5 further shows that styrene-maleic anhydride block copolymer is superior to polystyrene and polyethylene as the thermoplastic polymer. Low creep compliance values are desired for most purposes.

### Thermoplastic Content (Level Percent Thermoplastic Effect)

Comparison of Examples 11, 12 and 13 established that increasing levels of thermoplastic results in reductions in the creep compliance value while at the same time showing lower stress retention values. Those skilled in the art will be able to determine the appropriate balance of creep compliance and stress retention for a given application.

### Melt Flow Rate/Processing Effect

Comparison of Examples 1,3,15, and 16 show that products containing up to 50 percent styrene-isoprene-styrene as a part of the block copolymer composition maintain a consistent melt flow rate after extended processing, while product containing 100 percent styrene-butadiene-styrene show unacceptable melt flow rate properties after extended processing. High viscosity (low melt flow rate) makes practical processing difficult on conventional equipment. Maintaining a consistent melt viscosity during processing is desired for most purposes.

### Percent Styrene in the SBC

Comparison of Examples 1,3, and 17 to Examples 14, 15 and 16 respectively, establishes that products containing less than 29 percent styrene in the block copolymers component show higher stress retention while maintaining acceptable creep compliance value and permanent deformation properties.

### Production of Elastomeric Articles - Film

Examples 18 and 19 demonstrate that elastomeric films can be readily manufactured on conventional plastic equipment to meet the property requirements for an acceptable elastomeric article. Example 18 describes a useful article with elastomeric properties in only one direction (transverse direction only) while Example 19 describes a useful article with elastomeric properties in both directions (machine and transverse directions). Example 18 further demonstrates an elastomeric article with a high modulus of elasticity in the machine direction while retaining elastic performance in the transverse direction.

## Claims

1. A composition useful in preparing elastomeric articles which comprises:
A. from 70 to 95 parts by weight of one or more block copolymer(s) corresponding to the formula: A-B-R-(B-A)ₙ (Formula (I)) or A_{X}-(BA-)_{Y}-BA (Formula (II)) wherein each A is a polymer block comprising a monovinylidene aromatic monomer and each B is a polymer block comprising a conjugated diene, R is the remnant of a multifunctional coupling agent, and n is an integer from 1 to 5, x is 0 or 1, and y is from 0 to 3, at least 40 percent by weight of the block copolymers have the B block comprised of isoprene, the weight percent of monovinylidene aromatic monomer in the block copolymer is from 10 to 35 percent by weight, the total block copolymer composition contains no more than 4 percent by weight of a diblock of the Formula B-A, the block copolymers have a melt flow rate of from 2 to 30; and
B. from 5 to 30 parts by weight of a thermoplastic polymer comprising:
a.)
i. a copolymer comprising a monovinylidene aromatic monomer and an anhydride; and, optionally one or more of
ii. polystyrene; or
iii. polyethylene; or
b.) a blend of polystyrene and polyethylene;
wherein the total parts of block copolymer and thermoplastic polymer is 100 parts and films prepared from the composition exhibit a creep compliance of 1.5 MPa⁻¹ or less as measured according to ISO 899-1981(E) modified for elastomeric articles, a retention force of 60 percent or greater as measured according to ASTM-D 2991 at 30 minutes, and a permanent deformation of 10 percent or less as measured according to ASTM-D 4649.

2. The composition of Claim 1 wherein the average weight percentage of monovinylidene aromatic monomer in A is from 10 to 28 percent and the copolymers have a peak molecular weight of from 50,000 to 180,000.

3. The composition of Claim 1 or 2 wherein the block copolymer contains 2 percent by weight or less of diblock.

4. The composition according to any one of Claims 1 to 3 wherein the block copolymer is present in an amount of from 75 to 90 parts by weight and the thermoplastic polymer is present in an amount of 10 to 25 parts by weight.

5. The composition according to any one of Claims 1 to 4 wherein the block copolymer is a mixture of from 40 to 100 parts by weight of a triblock of styrene-isoprene-styrene and of from 0 to 60 percent by weight of a triblock of styrene-butadiene-styrene.

6. The composition according to any one of Claims 1 to 5 wherein the thermoplastic polymer is a monovinylidene aromatic monomer anhydride copolymer.

7. The composition according to any one of Claims 1 to 6 wherein the monovinylidene aromatic monomer content of the block copolymer is from 10 to 22 percent by weight.

8. An elastomeric article comprising the composition according to any one of Claims 1 to 7.

9. An elastomeric article according to Claim 8 which is in the form of a film, one or more fibers, or an article woven from fibers or a non-woven netting.

10. The elastomeric article according to Claim 8 or Claim 9 wherein the modulus in at least one direction is 60 MPa or greater, as measured according to ASTM D882-83.

## Patentansprüche

1. Zusammensetzung, verwendbar bei der Herstellung elastomerer Artikel, welche umfaßt:
A. von 70 bis 95 Gew.-Teile von einem oder mehreren Blockcoplymerem/n,welche der Formel entsprechen:
A-B-R-(B-A)ₙ (Formel (I)) oder Aₓ-(BA-)_{y}-BA (Formel (II)) worin jedes A ein Polymerblock ist, der ein monovinylidenaromatisches Monomeres umfaßt, und jedes B ein Polymerblock ist, der ein konjugiertes Dien umfaßt, R der Rest eines multifunktionellen Kupplungsmittels ist, und n eine ganze Zahl von 1 bis 5 ist, x = 0 oder 1 ist und y = 0 bis 3 ist, wenigstens 40 Gew.-% der Blockcopolymeren den B Block aus Isopren bestehend haben, der Gewichtsprozentsatz von monovinylidenaromatischem Monomerem in dem Blockcopolymeren von 10 bis 35 Gew-% beträgt, die Gesamtblockcopolymerzusammensetzung nicht mehr als 4 Gew.-% eines Diblockes der Formel B-A enthält, die Blockcopolymere eine Schmelzfließrate von 2 bis 30 besitzen; und
B. von 5 bis 30 Gew.-Teile eines thermoplastischen Polymeren, welches umfaßt:
a.)
i. ein Copolymeres, das ein monovinylidenaromatisches Monomeres und ein Anhydrid umfaßt, und wahlweise ein oder mehrere von
ii. Polystyrol, oder
iii. Polyethylen; oder
b.) eine Mischung von Polystyrol und Polyethylen;
worin die Gesamtteile von Blockcopolymerem und thermoplastischem Polymerem 100 Teile betragen, und aus der Zusammensetzung hergestellte Folien eine Kriechnachgiebigkeit von 1,5 MPa⁻¹ oder weniger, gemessen nach ISO 899-1981 (E) modifiziert für elastomere Artikel, eine Retentionskraft von 60 % oder größer, gemessen nach ASTM-D 2991 bei 30 Minuten, und eine bleibende Verformung von 10 % oder weniger, gemessen nach ASTM-D 4649, aufweisen.

2. Zusammensetzung nach Anspruch 1, worin der Durchschnittsgewichtsprozentsatz des monovinylidenaromatischen Monomeren in A von 10 bis 28 % beträgt und die Copolymere ein Spitzenmolekulargewicht von 50.000 bis 180.000 haben.

3. Zusammensetzung nach Anspruch 1 oder 2, worin das Blockcopolymere 2 Gew.-% oder weniger von Diblock enthält.

4. Zusammensetzung nach einem der Ansprüche 1 bis 3, worin das Blockcopolymere in einer Menge von 75 bis 90 Gew.-Teilen vorhanden ist und das thermoplastische Polymere in einer Menge von 10 bis 25 Gew.-Teilen vorhanden ist.

5. Zusammensetzung nach einem der Ansprüche 1 bis 4, worin das Blockcopolymere eine Mischung aus 40 bis 100 Gew.-Teilen eines Triblockes aus Styrol-Isopren-Styrol und aus 0 bis 60 Gew.-Teilen eines Triblockes aus Styrol-Butadien-Styrol ist.

6. Zusammensetzung nach einem der Ansprüche 1 bis 5, worin das thermoplastische Polymere ein Copolymeres aus monovinylidenaromatischem Monomerem/Anhydrid ist.

7. Zusammensetzung nach einem der Ansprüche 1 bis 6, worin der Gehalt an monovinylidenaromatischem Monomerem des Blockcopolymeren von 10 bis 22 Gew.-% beträgt.

8. Elastomerer Artikel, umfassend die Zusammensetzung nach einem der Ansprüche 1 bis 7.

9. Elastomerer Artikel nach Anspruch 8, welcher in Form einer Folie, eines oder mehrerer Fäden oder eines Artikels aus gewebten Fasern oder eines nichtgewebten Netzwerkes vorliegt.

10. Elastomerer Artikel nach Anspruch 8 oder Anspruch 9, bei welchem der Modul in wenigstens einer Richtung 60 MPa oder größer, gemessen nach ASTM D882-83, ist.

## Revendications

1. Composition utile dans la préparation d'articles élastomères, qui comprend :
A. de 70 à 95 parties en poids d'un ou de plusieurs copolymères à blocs répondant à la formule :
A-B-R-(B-A)ₙ (formule (I))
ou
Aₓ-(BA)_{y}-BA (formule (II)),
formules dans lesquelles chaque A représente un bloc polymère comprenant un monomère de type monovinylidène aromatique et chaque B représente un bloc polymère comprenant un diène conjugué, R représente le reste d'un agent de couplage poyfonctionnel et n représente un nombre entier allant de 1 à 5, x vaut 0 ou 1, et y vaut de 0 à 3, au moins 40 % en poids des copolymères à blocs comportant un bloc B constitué d'isoprène, le pourcentage pondéral de monomère de type monovinylidène aromatique dans le copolymère à blocs valant de 10 à 35 % en poids, la composition totale du copolymère à blocs ne contenant pas plus de 4 % en poids d'un dibloc de formule B-A, et les copolymères à blocs présentant un indice de fluidité à chaud de 2 à 30 ; et
B. de 5 à 30 parties en poids d'un polymère thermoplastique comprenant :
a)
i. un copolymère comprenant un monomère de type monovinylidène aromatique et un anhydride ; et éventuellement un ou plusieurs des
ii polystyrène ; ou
iii. polyéthylène ; ou
b) un mélange de polystyrène et de polyéthylène ;
dans laquelle les parties totales de copolymère à blocs et de polymère thermoplastique sont égales à 100 parties, et des films préparés à partir de la composition présentent une complaisance en fluage de 1,5 MPa⁻¹ ou moins, telle que mesurée selon la norme ISO 899-1981 (E) modifiée pour des articles élastomères, une force de rétention de 60 % ou plus, telle que mesurée selon la norme ASTM D-2991 à 30 minutes, et une déformation résiduelle de 10 % ou moins, telle que mesurée selon la norme ASTM D-4649.

2. Composition selon la revendication 1, dans laquelle le pourcentage pondéral moyen du monomère de type monovinylidène aromatique dans A vaut de 10 à 28 % et les copolymères présentent un pic de masse moléculaire allant de 50 000 à 180 000.

3. Composition selon la revendication 1 ou 2, dans laquelle le copolymère à blocs contient 2 % en poids du dibloc ou moins.

4. Composition selon l'une quelconque des revendications 1 à 3, dans laquelle le copolymère à blocs est présent en une quantité de 75 à 90 parties en poids, et le polymère thermoplastique est présent en une quantité de 10 à 25 parties en poids.

5. Composition selon l'une quelconque des revendications 1 à 4, dans laquelle le copolymère à blocs est un mélange de 40 à 100 parties en poids d'un tribloc styrène/isoprène/styrène, et de 0 à 60 % en poids d'un tribloc styrène/butadiène/styrène.

6. Composition selon l'une quelconque des revendications 1 à 5, dans laquelle le polymère thermoplastique est un copolymère de monomère de type monovinylidène aromatique/anhydride.

7. Composition selon l'une quelconque des revendications 1 à 6, dans laquelle la teneur en monomère de type monovinylidène aromatique du copolymère à blocs vaut de 10 à 22 % en poids.

8. Article élastomère comprenant la composition selon l'une quelconque des revendications 1 à 7.

9. Article élastomère selon la revendication 8, qui se trouve sous la forme d'un film, d'une ou de plusieurs fibres ou d'un article tissé à partir de fibres ou d'un filet non-tissé.

10. Article élastomère selon la revendication 8 ou 9, dans lequel le module dans au moins une direction vaut 60 MPa ou plus, tel que mesuré selon la norme ASTM D882-83.
